Europäisches Patentamt

European Patent Office

Office européen des brevets

(11) Veröffentlichungsnummer : **0 109 506**
**B1**

(12) **EUROPÄISCHE PATENTSCHRIFT**

(45) Veröffentlichungstag der Patentschrift :
05.03.86

(21) Anmeldenummer : **83109372.9**

(22) Anmeldetag : **21.09.83**

(51) Int. Cl.⁴ : **C 04 B 18/08**

(54) **Flugasche in lagerfähiger Form und Verfahren zur Herstellung.**

(30) Priorität : **20.11.82 DE 3242992**

(43) Veröffentlichungstag der Anmeldung :
**30.05.84 Patentblatt 84/22**

(45) Bekanntmachung des Hinweises auf die Patenterteilung : **05.03.86 Patentblatt 86/10**

(84) Benannte Vertragsstaaten :
**AT BE CH DE FR IT LI LU NL SE**

(56) Entgegenhaltungen :
**DE-A- 1 471 360**
**GB-A- 1 362 372**
**GB-A- 1 505 861**
**CHEMICAL ABSTRACTS, Band 84, Nr. 24, 14. Juni 1976, Seite 264, Nr. 168697r, Columbus, Ohio, USA, J. GRZYMEK et al.: "Binding materials made from calcareous fly ash, carbide residue and quicklime"**
**CHEMICAL ABSTRACTS, Band 94, Nr. 20, Mai 1981, Seite 305, Nr. 161603e, Columbus, Ohio, USA, J. MEDINA: "The use of fly ash and carbide lime in soil stabilization in Brazil"**

(73) Patentinhaber : **Otto A. Müller GmbH**
**Domstrasse 11**
**D-2000 Hamburg 1 (DE)**

(72) Erfinder : **Bäätjer, Klaus**
**Barkholt 12**
**D-2070 Grosshansdorf (DE)**

(74) Vertreter : **Dipl.-Ing. H. Hauck Dipl.-Phys. W. Schmitz Dipl.-Ing. E. Graalfs Dipl.-Ing. W. Wehnert Dr.-Ing. W. Döring**
**Neuer Wall 41**
**D-2000 Hamburg 36 (DE)**

## Beschreibung

Die Erfindung bezieht sich auf ein lagerfähiges körniges Material auf der Basis von Flugasche und einem hydraulischen, Zement und Gips enthaltenden, Bindemittelgemisch, unter Beimengung von Wasser gemischt und in körnige Form gebracht. Ein solches Material ist aus der DE-A-1 471 360 bekannt. Es ist jedoch nicht lagerfähig, da die in der Flugasche vorhandenen Schadstoffe nicht ausreichend gebunden sind.

Als Verbrennungsrückstand in Kohlekraftwerken fällt Flugasche an, die sich aus unterschiedlichen Gehalten an Restkohlenstoff und anderen chemischen Stoffen zusammensetzt. Seit langem sind Vorschläge bekannt, Flugasche so aufzubereiten, daß sie als Zuschlagstoff für die Bauindustrie nutzbar gemacht werden kann. Es ist etwa bekannt, Flugasche mit Abfallkalkschlämmen, wie sie bei der Zersetzung von Calciumkarbid entstehen, zu vermischen (DE-C 859 426).

Ein anderes bekanntes Verfahren zur Herstellung eines Zuschlagstoffes aus Abfallstaub braunkohlebeheizter Anlagen sieht vor, daß ein Gemisch aus Staub und Zusätzen granuliert wird und die Granalien nach einer Vorwärmung gesintert werden (DE-C 2 018 221). Es ist auch bekannt, zur Herstellung eines Flugasche-Granulats den Staub aus dem Trockenabscheider eines Kohlekraftwerks mit dem getrockneten oder gebrannten Rückstand der Schwefelwäsche (Calciumsulfatrückstände) zu vermischen. Das daraus sich bildende steinartige Granulat wird ggf. gemahlen.

Alle bekannten Verfahren haben mindestens einen, zumeist zwei Nachteile. Sie sind zu wenig wirtschaftlich, um Eingang in die Praxis zu finden. So ist etwa ein Sinterprozeß mit einem zu hohen Einsatz an Energiekosten verbunden. Andererseits sind, wie eingangs schon erwähnt, die in der Flugasche enthaltenen Schadstoffe nicht so gebunden, daß ein umweltfreundlicher Einsatz gewährleistet ist. Vielmehr besteht die Gefahr, daß die schädlichen Substanzen ausgewaschen werden und den Boden belasten. Dieser Nachteil ist bei einer Ablagerung auf Deponien und beim Einsatz als Zuschlagstoff etwa im Straßen- und Wegebau gleichermaßen gegeben.

Der Erfindung liegt daher die Aufgabe zugrunde, den bei der Verbrennung in Kohlekraftwerken anfallenden Flugaschestaub in eine Form zu bringen, die eine umweltfreundliche Ablagerung erlaubt. Es soll ein körniges Material der eingangs beschriebenen Art bereitsgestellt werden, das lagerfähig ist und sich als Zuschlagstoff oder Füllstoff, insbesondere in der Bauindustrie verwenden läßt. Darüber hinaus soll ein Verfahren zur Herstellung dieses Materials angegeben werden.

Diese Aufgabe wird durch das Material des Anspruches 1 und das Verfahren des Anspruches 9 gelöst. Bevorzugte Ausführungsformen sind in den Unteransprüchen angegeben.

Es hat sich gezeigt, daß die gemeinsame Verwendung von Flugasche mit Zement, Gips und Karbidschlamm zu einem Flugasche-Fertigprodukt führt, das sich durch gute Lagerfähigkeit auszeichnet. Die Vermischung mit den drei Bindemitteln führt zu einem körnigen Gut, dessen Körner sich durch ausreichende Festigkeit und Widerstandsfähigkeit gegenüber einem Auslagen bei Wasserlagerung bzw. Berührung mit Grundwasser auszeichnen. Schwermetalle und andere Umwelt belastende Substanzen bleiben gleichwohl fest eingebunden. Eine alkalische Reaktion der Zuschlagstoffe mit der Umwelt wird ebenfalls weitgehend vermieden.

Bei Verwendung als Zuschlagstoff für die Bauindustrie ist das erfindungsgemäße Produkt ebenfalls gut geeignet. Es zeichnet sich durch eine ausreichende Festigkeit und Frostbeständigkeit aus. Ferner entfällt jegliche Aggressivität gegenüber Eisen- bzw. Stahlkonstruktionen, wenn sie als Zuschlagstoff oder Füllstoff verwendet werden.

Das Verhältnis von Flugaschestaub zum hydraulischen Bindemittel beträgt vorzugsweise 3/4 zu 1/4.

Besonders ausgezeichnete Ergebnisse lassen sich erfindungsgemäß durch folgende Mischung erzielen : Auf 100 Gewichtsanteile Flugasche 8 bis 12 Gewichtsanteile Zement,

7 bis 11 Gewichtsanteile Gips

6,5 bis 8,5 Gewichtsanteile Calciumkarbid.

Die Erfindung hat den weiteren Vorteil, daß weitere umweltbelastende Substanzen umweltfreundlich eingebunden werden. Gipsfüller fällt etwa bei der Rauchgasentschwefelung an. Karbidschlamm ist ein Abfallprodukt bei der Herstellung von Acetylen. Es wird vorzugsweise mindestens 14 Tage abgelagert, bevor es als Bindemittelkomponente Verwendung findet.

Nach einer weiteren Ausgestaltung der Erfindung erweist es sich als vorteilhaft, wenn mindestens ein Zusatzstoff, wie ein Härtungsbeschleuniger, ein Verzögerer, ein Porenbildner, ein Pelletierhilfsmittel oder ein Gemisch von zwei oder mehreren dieser Stoffe zugesetzt wird. Es können irgendwelche hierfür bekannten Stoffe verwendet werden. Bevorzugt werden als Beschleuniger Sulfatbeschleuniger wie Alaun, Natriumhydrogensulfat ; als Verzögerer Phosphate wie Natriumphosphat oder $Na_2HPO_4$ ; als Porenbildner verseiftes Naturharz, insbesondere verseiftes Wurzelharz ; und als Pelletierhilfsmittel ein Kunstharz mit reaktiven Gruppen, vorzugsweise ein Acryl-homo- oder -copolymerisat mit sauren Gruppen, wie Carboxylgruppen. Der Anteil derartiger Zusätze beträgt etwa 1,5 % bzw. etwa 2 Gewichtsanteile auf 100 Anteile Flugasche. Der Härtungsbeschleuniger führt dazu, daß die Granalien innerhalb relativ kurzer Zeit abbinden uns sich verfestigen, wobei zu berücksichtigen ist, daß auch bereits der zugesetzte Gips als Härtungsbeschleuniger dient. Ein Verzögerer trägt dazu bei, daß der Abbindevorgang durch die ganze Masse gleichmäßig verläuft. Der Porenbildner begünstigt den Wasseraustritt und das Pelletierhilfsmittel den Anfall möglichst gleichmäßiger Pellets.

Bei der Herstellung des Produktes wird Anmachwasser eingesetzt. Die Menge des Anmachwassers hängt naturgemäß von dem Feuchtigkeitsgehalt des Einsatzmaterials ab, nämlich ob die Flugasche trocken oder feucht ist und der Elektrofiltergips trocken oder als Schlamm anfällt. Nach einer Ausgestaltung der Erfindung soll auf 100 % Flugasche, Bindemittelgemisch und Zusatzstoffe zwischen 10 und 32 % Anmachwasser verwendet werden.

Nach einer weiteren Ausgestaltung der Erfindung ist vorgesehen, daß die Flugaschekörper mit Flugaschestaub gepudert sind. Die Bepuderung bewirkt, daß die vorhandene Oberflächenfeuchtigkeit weitgehend gebunden wird. Dadurch wird die Trocknung der Oberfläche gewährleistet und ein Zusammenbacken der Granalien im weiteren Verarbeitungsgang nahezu ausgeschlossen. In den Wintermonaten wird überdies eine Vereisung durch nicht gebundes Oberflächenwasser verhindert. Vorzugsweise wird eine Menge Flugaschestaub zugegeben, die annähernd 8 bis 14 % Oberflächenfeuchtigkeit bindet.

Ein Verfahren zur Herstellung von Flugasche-Fertigprodukten der oben beschriebenen Art sieht erfindungsgemäß vor, daß Flugaschestaub und hydraulisches Bindemittelgemisch zunächst vorgemischt werden.

Erst anschließend werden Anmachwasser und ggf. Zusatzstoffe zugesetzt. In einem Spezial-Zwangsmischer wird das Gemisch in granulatartige Form gebracht. Die Vormischzeit beträgt etwa 30 Sekunden. Sie ist jedoch von der Konsistenz der einzelnen Stoffe abhängig sowie davon, welche Feuchtigkeit sie aufweisen. Vorzugsweise kommt ein Mischer zum Einsatz, der neben einem Rührwerk einen Wirbler enthält, der die Erzeugung einer homogenen granulatartigen Substanz gewährleistet. Bei dem Mischprozeß ist entscheidend, daß die Masse homogen vermischt wird. Zu diesem Zweck kommt es auf die exakte Wasserzugabe sowie auf die Umdrehungsgeschwindigkeit von Rührwerk und Wirbler entscheidend an.

Die weiteren Zusatzstoffe wie Härtungsbeschleuniger und/oder Porenbildner werden vorzugsweise in flüssiger Form eigesetzt und zwar derart, daß sie in den Zulauf des Anmachwassers eingetragen werden. Auf diese Weise läßt sich eine Vormischung der Zusatzstoffe mit dem Wasser erreichen.

Es wurde bereits erwähnt, daß es außerordentlich vorteilhaft ist, die Frischgranalien zu bepudern. In diesem Zusammenhang sieht eine weitere Ausgestaltung der Erfindung vor, daß das granulatartige Gut annähernd gleichmäßig verteilt aus geringer Fallhöhe auf ein Förderband ausgetragen wird und in einer Puderstation Flugasche über die Breite des Förderbandes ausgeblasen wird. Das Austragen der Granalien auf das Förderband muß so vorsichtig erfolgen, daß sie nicht zerstört werden. Die Breite und die Geschwindigkeit des Förderbandes ist so gewählt, daß die Granalien flächenartig auf dem Förderband angeordnet sind, so daß eine gleichmäßige Bepuderung in der Puderstation vorgenommen werden kann.

Obwohl durch das Bepudern mit Flugaschestaub die Oberflächenrestfeuchte der Granalien gebunden werden soll, besteht gleichwohl die Gefahr des Verklumpens oder Verbackens, wenn die Granalien kegelartig geschüttet werden. Daher sieht eine Ausgestaltung der Erfindung vor, daß das granulatartige Gut gleichmäßig verteilt abgelagert wird. Dies kann etwa erreicht werden durch ein sehr breites Abwurfband oder durch ein pendelndes Förderband über eine sogenannte Rundhaldenbeschickung.

Es erweist sich ferner als zweckmäßig, wenn nach einer weiteren Ausgestaltung der Erfindung das granulatartige Gut nach einer Lagerzeit nach Korngrößen gesiebt wird. Die Feinsiebe sind vorzugsweise mit Rüttlern auszurüsten, um ein Zukleben der Siebe auszuschließen. In diesem Zusammenhang sieht eine weitere Ausgestaltung der Erfindung vor, daß während des Absiebevorgangs ein Nachpudern mit Flugaschestaub erfolgt. Besonders bei kalter Witterung wird daher ein Zusammenbacken der Granalien verhindert.

Nach einer weiteren Lagerzeit, von zum Beispiel 5 Tagen, erreichen dann die Granalien eine ausreichende Transportfestiget bzw. Einbaufestigkeit. Die Granalien haben dann die Möglichkeit, während und nach der Einbauzeit sich weiter zu verfestigen, ähnlich wie dieses bei Beton und anderen Zuschlagstoffen mit hydraulischen Bindemitteln der Fall ist. Bei einer Deponieablagerung ist wie auch in anderen Einsatzfällen gewährleistet, daß die gebundenen Schwermetalle bei Wasserlagerung bzw. Berührung mit Grundwasser nicht ausgewaschen werden. Ferner ist sichergestellt, daß die abschlämmbaren Bestandteile die für Kies und Sand gültigen Normen nicht überschreiten. Auch ist eine ausreichende alkalische Resistenz gewährleistet und damit der Einsatz in der Bauindustrie bzw. das umweltfreundliche Lagern auf einer Deponie.

Grundsätzlich gibt es drei verschiedene Formen zur Bildung der erfindungsgemäßen Flugasche :
Granalien,
Pellets,
Splitte.

Die Granalien werden ohne weiteres in geeigneter Form durch den erwähnten Zwangsmischer/Mischteller erzielt. Es ist ohne weiteres möglich, erfindungsgemäße Granalien als Füllmaterial im Straßen-, Deich- und Wegeunterbau einzusetzen. Ein kontinuierlicher Kornaufbau gewährleistet eine günstige Verdichtung. Ein Zerplatzen während und nach dem Einbau ist weitgehend ausgeschlossen. Es ist ohne weiteres möglich, die frostunbeständigen Bestandteile unter 10 % zu halten.

Alternativ können Pellets hergestellt werden. Zu diesem Zwecke werden die Frischgranalien, aus dem

3

Zwangsmischer kommend, einem Pelletierteller zugeführt. Der Grünling wird durch kontinuierliches Hinzufügen eines Gemisches aus Flugaschestaub, Zement, Gips, Karbidschlamm und Anmachwasser über Sprühdüsen in bekannter Weise pelletiert. Je nach Stellung des Mischtellers wird die Größe der Pellets bestimmt. In bezug auf die Frostbeständigkeit derartiger Pellets sind die Forderungen der DIN 4226 erreichbar.

Schließlich können aus der Flugasche auch Splitte hergestellt werden. Zu diesem Zweck wird die Mischzeit im Zwangsmischer verlängert, um etwa 40 Sekunden. Dadurch entstehen relativ große Granalien, die im übrigen in der oben beschriebenen Weise weiter verarbeitet werden. Bei größeren Haldenhöhen beschleunigt die in der Halde auftretende Wärme den hydraulischen Abbindeprozeß wesentlich und es entsteht ein unverhältnismäßig fester Betonstein. Aufgrund der nicht zu vermeidenden Klumpenbildung wird das Material dann vorzugsweise anschließend einem Backen- oder Kreiselbrecher zugeführt. Das gebrochene Korn kann dann wiederum gesiebt und entsprechend den Körnungen aufbereitet und in den Einzelfraktionen aufgehaldet werden. Auch bei Splitten lassen sich die Anforderungen für den Beton und für den Einsatz im Straßenbau erfüllen, wobei auch hier die frostunbeständigen Bestandteile auf unter 4 % gehalten werden können.

Mit der Erfindung bzw. dem erfindungsgemäße, Verfahren wird erstmals angegeben, wie Flugasche deponiefähig zu machen ist bzw. wie sie in der Bauindustrie eingesetzt werden kann. Der Aufwand zur Herstellung der erfindungsgemäße, Flugasche ist relativ niedrig, vor allem der Energieeinsatz ist klein und beschränkt sich auf die Antriebsenergie.

Die Erfindung wird nachfolgend anhand von Beispielen und Zeichnungen näher erläutert.

Figur 1   zeigt schematisch den Verfahrensablauf der Erfindung zur Herstellung von Flugaschegranalien.

Figur 2   zeigt schematisch die Herstellung von Flugaschepellets.

Figur 3   zeigt schematisch die Herstelung von Flugaschesplitten.

Bevor auf die in den Zeichnungen dargestellten Einzelheiten näher eingegangen wird, sei vorangestellt, daß jedes der beschriebenen oder gezeigten Merkmale für sich oder in Verbindung mit Merkmalen der Ansprüche von erfindungswesentlicher Bedeutung ist.

Die Bezugszeichen 1 bis 4 kennzeichnen eine Silogruppe, wobei im Silo 1 Flugasche und in den Silos 2 bis 4 hydraulische Bindemittel enthalten sind. Über eine Rohstoffwaage 5 werden die Substanzen aus den Silos 1 bis 4 dosiert in einen Mischgranulator 6 eingetragen, der ein Rührwerk und einen Wirbler enthält.

In Vorratsbehältern 8 bis 10 werden Zusatzstoffe gelagert, die in die Wasserzuführung 7 zum Mischgranulator 6 eingetragen und dadurch bereits vorgemischt werden. Die Frischgranalien aus dem Granulator 6 werden auf ein Förderband 11 ausgetragen und in einer Bepuderungsanlage gleichmäßig bepudert. Von der Bepuderungsanlage 12 gelangen die bepuderten Granalien über ein Förderband 13 zu einer Rundhaldenbeschickungsanlage. Ein Förderband 15 transportiert die gehärteten Granalien von der Halde zu einer Siebanlage 16, in der eine Klassifizierung in Korngrößen zwischen 0 und 32 mm vorgenommen wird. Während des Absiebens kann ein weiteres Bepudern mit Flugaschestaub stattfinden, was hier nicht dargestellt ist. Von der Siebanlage 16 gelangt das abgesiebte Gut über ein Förderband 17 zu einer Halde 18, von wo es mit Hilfe eines Radladers und eines LKWs zur Deponie oder zu einem anderen Lagerort abgefahren werden kann.

Bei der Absiebung entstehendes Mehl wird über eine Rückleitung in den Granulator 6 zurückbefördert.

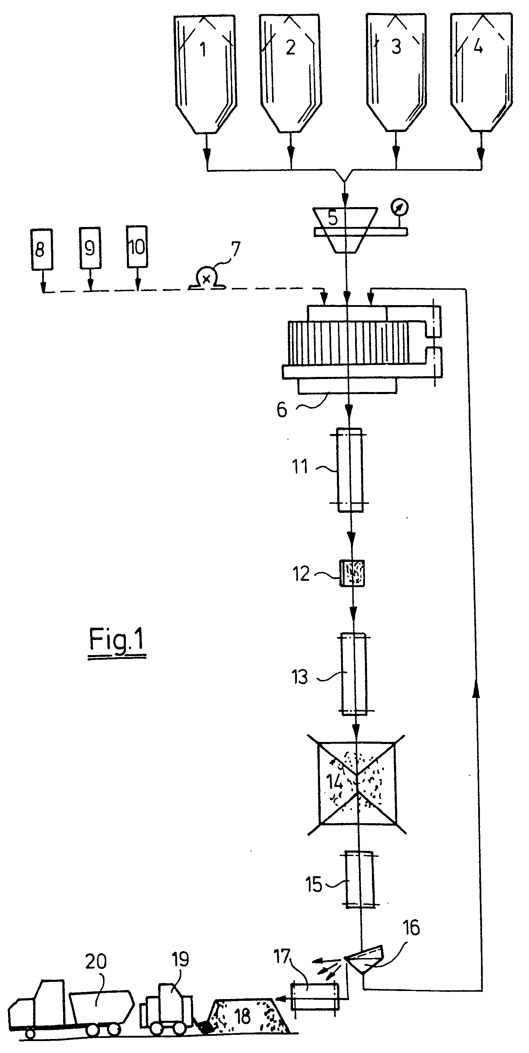

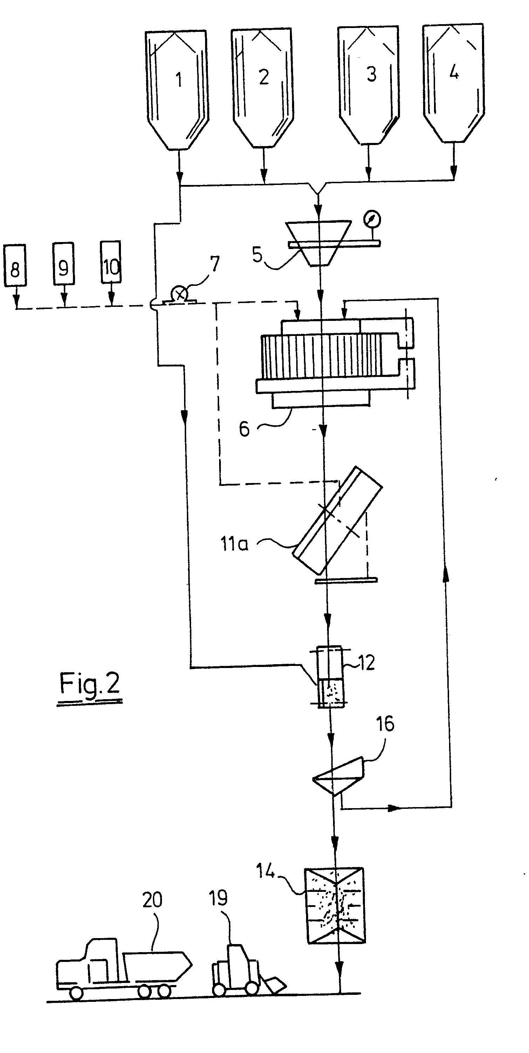

Fig. 2 gleicht im wesentlichen Fig. 1, und gleiche Teile sind mit gleichen Bezugszeichen versehen. In Fig. 2 ist außerdem ein Pelletierteller 11a dargestellt, der dem Granulator 6 nachgeordnet ist. Dem Pelletierteller 11a wird, wie durch eine gestrichelte Linie angedeutet, ebenfalls Wasser zugeführt.

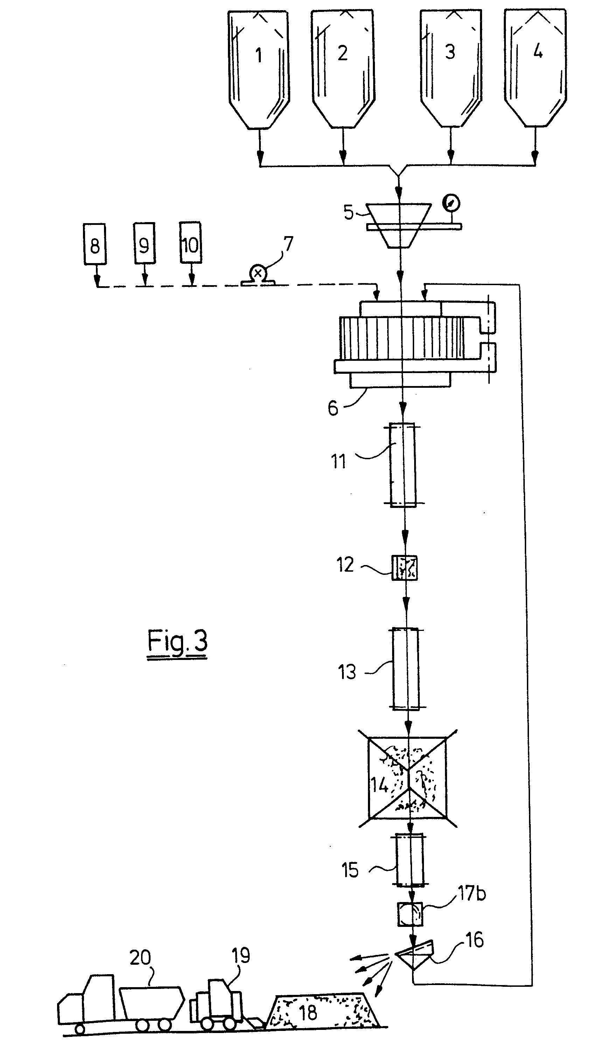

Fig. 3 zeigt wiederum eine ähnliche Anlage wie Fig. 1. Daher sind wiederum gleiche Teile mit gleichen Bezugszeichen versehen. Da mit der Anlage nach Fig. 3 Splitte hergestellt werden sollen, ist an das Förderband 15 eine Brechanlage 17b angeordnet, welche die relativ großen und harten Flugaschebroken zerkleinert.

Durch Nutzung der Eigenwärme und Druck innerhalb der Halde wird der Abbinde-Prozeß beschleunigt und es entstehen kleinere Brocken, die dann nach einem Brecher-Prozeß als Splitt zur Verfügung stehen.

Nachstehend wird ein Beispiel für eine Rezeptur, bezogen auf trockene Bindemittel-Zusatzstoffe angegeben :

| | Bereich | | bevorzugte Zusammensetzungen | |
|---|---|---|---|---|
| Flugasche | 75 | bis 80 Gew.-% | 77,5 Gew.-% | 77,5 Gew.-% |
| Zement | 6,5 | bis 10 Gew.-% | 8 Gew.-% | 7 Gew.-% |
| Gipsfüller | 5,5 | bis 9 Gew.-% | 7 Gew.-% | 7 Gew.-% |
| Karbidschlamm | 5 | bis 7 Gew.-% | 6 Gew.-% | 7 Gew.-% |
| Zusatzstoffe | 0 | bis 2,5 Gew.-% | 1,5 Gew.-% | 1,5 Gew.-% |
| | | | 100,0 Gew.-% | 100,0 Gew.-% |

Anmachwasser je nach Feuchtigkeitsgehalt der Zuschlagstoffe 10 bis 32 %.

Nachstehend Beispiele für ungünstige Ergebnisse :

1. Schlechte Frostbeständigkeit
(grundsätzlich bei hohem Kalkanteil)

| FA | 60 % | FA | 70 % |
|---|---|---|---|
| P₂35 | 10 % | P₂35 | 2 % |
| Carbid | 20 % | Carbid | 20 % |
| Gipsfüller | 10 % | Kalkhydrat | 7 % |
| keine Zusatzstoffe | | Schnell- | |
| | | Erhärter | 1 % |

2. Schlechte Festigkeit
(grundsätzlich bei hoher Wasserzugabe,
also über 30 % Anmachwasser)

| FA | 70 % | FA | 70 % |
|---|---|---|---|
| P₂35 | 2 % | P₂35 | 3 % |
| Feinstsand | 18 % | Carbid | 7 % |
| Carbid | 10 % | Kalkhydrat | 10 % |
| | | Feinstsand | 10 % |

**Patentansprüche**

1. Lagerfähiges körniges Material auf der Basis von Flugasche und einem hydraulischen, Zement und Gips enthaltenden, Bindemittelgemisch, unter Beimengung von Wasser gemischt und in körnige Form gebracht, dadurch gekennzeichnet, daß die Flugasche beliebiger Herkunft ist und das Bindemittelgemisch Karbidschlamm und ggf. Zusatzstoffe enthält, und daß auf 100 Gewichtsteile Flugasche 8 bis 12 Gewichtsteile Zement, 7 bis 11 Gewichtsteile Gips und 6,5 bis 8,5 Gewichtsteile Calciumkarbid kommen.

2. Lagerfähiges körniges Material nach Anspruch 1, dadurch gekennzeichnet, daß die hydraulischen Bindemittel in dem Bindemittelgemisch in etwa gleichen Teilen vorliegen.

3. Lagerfähiges körniges Material nach Anspruch 1 oder 2, dadurch gekennzeichnet, daß das Verhältnis von Flugasche zu Bindemittelgemisch etwa 3/4 zu 1/4 beträgt. ·

4. Lagerfähiges körniges Material nach einem der Ansprüche 1 bis 3, dadurch gekennzeichnet, daß es als Zusatzstoffe einen Härtungsbeschleuniger, einen Verzögerer, einen Porenbildner, ein Pelletierhilfsmittel oder ein Gemisch von zwei oder mehreren dieser Stoffe enthält.

5. Lagerfähiges körniges Material nach Anspruch 4, dadurch gekennzeichnet, daß es als Härtungsbeschleuniger ein Sulfat, als Verzögerer ein Phosphat, als Porenbildner ein verseiftes Wurzelharz und als Pelletierhilfsmittel ein Acryl-homo oder -copolymerisat, das saure Gruppen trägt, enthält.

6. Lagerfähiges körniges Material nach einem der Ansprüche 1 bis 5, dadurch gekennzeichnet, daß zum Abbinden auf 100 % trockene Ausgangsstoffe zwischen 10 und 32 % Anmachwasser verwendet worden sind.

7. Lagerfähiges körniges Material nach einem der Ansprüche 1 bis 6, dadurch gekennzeichnet, daß die Flugaschekörner mit Flugaschestaub gepudert sind.

8. Lagerfähiges körniges Material nach Anspruch 7, gekennzeichnet durch eine Menge Flugaschestaub, die annähernd 8 bis 14 % Oberflächenfeuchtigkeit bindet.

9. Verfahren zur Herstellung von lagerfähigem körnigem Material nach einem der Ansprüche 1 bis 8, wobei Flugasche und das hydraulische Bindemittelgemisch zunächst vorgemischt werden und erst anschließend Anmachwasser zugefügt wird, dadurch gekennzeichnet, daß dem Anmachwasser ggf. ein oder mehrere Zusatzstoffe zugefügt werden und das Gemisch in einem Zwangsmischer in granulatartige Form gebracht wird.

10. Verfahren nach Anspruch 9, dadurch gekennzeichnet, daß die Vormischzeit etwa 30 Sekunden beträgt.

11. Verfahren nach Anspruch 9 oder 10, dadurch gekennzeichnet, daß Härtungsbeschleuniger und/oder Porenbildner in flüssiger Form verwendet werden und in den Zulauf des Anmachwassers eingetragen werden.

12. Verfahren nach einem der Ansprüche 9 bis 11, dadurch gekennzeichnet, daß das granulatartige Gut annähernd gleichmäßig verteilt aus geringer Fallhöhe auf ein Förderband ausgetragen und in einer Puderstation Flugaschestaub über die Breite des Förderbandes ausgeblasen wird.

13. Verfahren nach einem der Ansprüche 9 bis 12, dadurch gekennzeichnet, daß das granulatartige Gut gleichmäßig verteilt abgelagert wird.

14. Verfahren nach einem der Ansprüche 9 bis 13, dadurch gekennzeichnet, daß das granulatartige Gut nach einer Lagerzeit nach Korngrößen gesiebt wird.

15. Verfahren nach Anspruch 14, dadurch gekennzeichnet, daß während des Absiebevorgangs ein Nachpudern mit Flugaschestaub erfolgt.

16. Verfahren nach einem der Ansprüche 9 bis 15, dadurch gekennzeichnet, daß das frische noch nicht abgebundene granulatartige Gut pelletiert wird.

17. Verfahren nach Anspruch 16, dadurch gekennzeichnet, daß der Grünling durch kontinuierliches Hinzufügen von Flugaschestaub und Anmachwasser pelletiert wird.

18. Verfahren nach einem der Ansprüche 9 bis 17, dadurch gekennzeichnet, daß die Flugasche vor dem Vermischen mit den Bindemitteln und ggf. Zusatzstoffen angefeuchtet wird.

19. Verwendung des lagerfähigen körnigen Materials nach einem der Ansprüche 1 bis 8 als Zuschlagstoff und/oder Füllstoff, insbesondere für die Bauindustrie.

## Claims

1. A storable granular material on the basis of fly ashes and a hydraulic mixture of a bonding agent containing cement and gypsum, mixed under admixture of water and brought into granular shape, characterized in that the fly ashes are of any origin, and that the bonding agent mixture contains carbide sludge and, optionally, additives, and in that for every 100 parts by weight of fly ashes there are 8 to 12 parts by weight of cement, 7 to 11 parts by weight of gypsum, and 6.5 to 8.5 parts by weight of calcium carbide.

2. A storable granular material according to claim 1, characterized in that the hydraulic bonding agents are present in the mixture in approximately equal parts.

3. A storable granular material according to claim 1 or 2, characterized in that the ratio of fly ashes to bonding agent mixture is about 3/4 to 1/4.

4. A storable granular material according to any one of the claims 1 to 3, characterized in that it contains as additives a hardening accelerator, a retarder, a pore forming agent, a pelletizing aid or a mixture of two or more of the above substances.

5. A storable granular material according to claim 4, characterized in that it contains a sulfate as a hardening accelerator, a phosphate as a retarder, a saponified root resin as a pore forming agent, and an acryl homo- or copolymer as a pelletizing aid which carries acid groups.

6. A storable granular material according to any one of the claims 1 to 5, characterized in that for setting between 10 and 32 % of mixing water have been used for 100 % of dry starting materials.

7. A storable granular material according to any one of the claims 1 to 6, characterized in that the fly ash granules are powdered with fly ash dust.

8. A storable granular material according to claim 7, characterized by an amount of fly ash dust binding approximately 8 to 14 % surface moisture.

9. A process for the production of a storable granular material according to any one of the claims 1 to 8, wherein fly ashes and the hydraulic bonding agent mixture are first pre-mixed and the mixing water is added only thereafter, characterized in that the mixing water, optionally, has added thereto one or more additives and the mixture is brought into a granular condition in a coercive mixing apparatus.

10. A process according to claim 9, characterized in that the period of pre-mixing is about 30 seconds.

11. A process according to claim 9 or 10, characterized in that hardening accelerators and/or pore forming agents are utilized in a liquid form and are charged into the supply flow of the mixing water.

12. A process according to any one of the claims 9 to 11, characterized in that the granular material is dispensed onto a coneveyor belt from a low dropping height in an approximately uniform distribution and fly ash dust is blown out over the entire width of the conveyor belt in a powdering station.

13. A process according to any one of the claims 9 to 12, characterized in that the granular material is deposited in uniform distribution.

14. A process according to any one of the claims 9 to 13, characterized in that the granular material is screened according to grain sizes after a period of storage.

15. A process according to claim 14, characterized in that during the screening step a re-powdering action takes place with fly ash dust.

16. A process according to any one of the claims 9 to 15, characterized in that the fresh, not yet cured granular material is pelletized.

17. A process according to claim 16, characterized in that the uncured material is pelletized by continuously adding fly ash dust and mixing water.

18. A process according to any one of the claims 9 to 17, characterized in that the fly ashes are well moistened prior to the mixing with the bonding agents and, optionally, the additives.

19. The use of a storable granular material according to any one of the claims 1 to 8, as an additive and/or a filler, especially for the constructional industry.

## Revendications

1. Produit granuleux stockable à base de cendres volantes et d'un mélange de liants hydrauliques, contenant du ciment et du plâtre, mélangé avec addition d'eau et amené sous forme granuleuse, caractérisé en ce que les cendres volantes ont une origine quelconque et que le mélange de liants contient de la boue de carbure et éventuellement des matières additionnelles, et que pour 100 parties en poids de cendres volantes il y a 8 à 12 parties en poids de ciment, 7 à 11 parties en poids de plâtre et 6,5 à 8,5 parties en poids de carbure de calcium.

2. Produit granuleux stockable selon la revendication 1, caractérisé en ce que les liants hydrauliques se trouvent, dans le mélange de liants, sensiblement à parties égales.

3. Produit granuleux stockable selon la revendication 1 ou 2, caractérisé en ce que le rapport des cendres volantes au mélange de liants vaut environ 3/4 à 1/4.

4. Produit granuleux stockable selon l'une des revendications 1 à 3, caractérisé en ce qu'il contient, comme matières additionnelles, un accélérateur de durcissement, un retardateur, un agent porogène, un agent auxiliaire de formation de granules ou un mélange de deux ou plusieurs de ces matières.

5. Produit granuleux stockable selon la revendication 4, caractérisé en ce qu'il contient, comme accélérateur de durcissement, un sulfate ; comme retardateur, un phosphate ; comme agent porogène, une résine de racines saponifiée, et, comme agent auxiliaire de formation de granules, un homo- ou copolymère acrylique portant des groupes acides.

6. Produit granuleux stockable selon l'une des revendications 1 à 5, caractérisé en ce qu'on utilise, pour la prise de 100 % de matières premières sèches, entre 10 et 32 % d'eau de gâchage.

7. Produit granuleux stockable selon l'une des revendications 1 à 6, caractérisé en ce que les grains à base de cendres volantes sont poudrés par de la poussière de cendres volantes.

8. Produit granuleux stockable selon la revendication 7, caractérisé par une quantité de poussière de cendres volantes qui lie environ 8 à 14 % de l'humidité superficielle.

9. Procédé pour la fabrication d'un produit granuleux stockable selon l'une des revendications 1 à 8, dans laquelle les cendres volantes et le mélange de liants hydrauliques sont d'abord prémélangés, puis de l'eau de gâchage est ajoutée, caractérisé en ce qu'il est ajouté à l'eau de gâchage éventuellement une ou plusieurs matières additionnelles et en ce que le mélange est amené dans un malaxeur à mélange forcé sous une forme granuleuse.

10. Procédé selon la revendication 9, caractérisé en ce que la durée du prémélange est d'environ 30 secondes.

11. Procédé selon la revendication 9 ou 10, caractérisé en ce qu'on emploie des accélérateurs de durcissement et/ou des agents porogènes sous une forme liquide, lesquels sont introduits dans l'alimentation de l'eau de gâchage.

12. Procédé selon l'une des revendications 9 à 11, caractérisé en ce que le produit granuleux est réparti de façon sensiblement uniforme, à partir d'une faible hauteur de chute, sur une courroie transporteuse et en ce que de la poussière de cendres volantes dans une station de poudrage est soufflée sur la largeur de la courroie transporteuse.

13. Procédé selon l'une des revendications 9 à 12, caractérisé en ce que le produit granuleux est déposé, réparti de manière uniforme.

14. Procédé selon l'une des revendications 9 à 13, caractérisé en ce que le produit granuleux est tamisé, après un certain temps de stockage, suivant les grosseurs de grains.

15. Procédé selon la revendication 14, caractérisé en ce qu'un nouveau poudrage est effectué avec de la poussière de cendres volantes pendant l'opération de tamisage.

16. Procédé selon l'une des revendications 9 à 15, caractérisé en ce que le produit frais granuleux et non encore pris est conforme en granules.

17. Procédé selon la revendication 16, caractérisé en ce que l'ébauche du granule est conformée par addition continuelle de poussière de cendres volantes et d'eau de gâchage.

18. Procédé selon l'une des revendications 9 à 17, caractérisé en ce que les cendres volantes sont humidifiées avant mélange avec les liants et éventuellement avec des matières additionnelles.

19. Utilisation du produit granuleux stockable selon l'une des revendications 1 à 8 comme matériau d'appoint et/ou de charge, en particulier pour l'industrie de la construction.

Fig.1

Fig.2

Fig. 3